# EUROPEAN PATENT APPLICATION

(11) **EP 4 456 266 A1**
(43) Date of publication of application: **30.10.2024**
(21) Application number: 22954392.1
(22) Date of filing: 10.08.2022
(51) Int. Cl.: H01M 50/10

(54) **BATTERY AND ELECTRIC DEVICE**

(71) Applicant: Contemporary Amperex Technology Co., Limited, Fujian 352100 (CN)
(72) Inventor: LONG, Chao, Ningde City, Fujian 352100 (CN); ZHANG, Wenhui, Ningde City, Fujian 352100 (CN); CHEN, Xingdi, Ningde City, Fujian 352100 (CN); WANG, Peng, Ningde City, Fujian 352100 (CN)
(74) Representative: Ran, Handong
(86) International application number: PCT/CN2022/111357
(87) International publication number: WO 2024/031416

(57) **Abstract**

The embodiments of the present application provide a battery and an electric device. The battery comprises a case body, a battery pack and a limiting piece. The battery pack is arranged in the case body, and the battery pack comprises two or more battery cells arranged in a first direction, wherein each battery cell comprises a first side wall and a second side wall, which are connected to each other, the first side wall is the wall with the largest area among all outer walls of the battery cell, and second side walls of two adjacent battery cells are arranged opposite each other in the first direction. The limiting piece is fixedly connected to the case body and abuts against the first side walls of the battery cells, and the limiting piece is used for limiting deformation of the battery cells in a second direction, wherein the second direction is perpendicular to the first side walls. By means of the embodiments of the present application, the preparation process can be simplified, the cost can be reduced, and a lightweight design can be realized while meeting the requirements for limiting fixation and expansion-force resistance.

## Description

### Technical Field

The present application relates to the technical field of batteries, and more particularly to a battery and an electrical apparatus.

### Background

Energy saving and emission reduction is the key to the sustainable development of automobile industry, and electric vehicles have become an important component of the sustainable development of automotive industry due to their advantages of energy saving and environmental protection. Battery technology is an important factor related to development of electric vehicles.

In an existing battery manufacturing process, end plates are usually arranged and battery cells are fastened through connecting elements. Reinforcement structures are often arranged on the end plates to resist the expansive force of the battery cells. However, the arrangement requires many parts, is complicated in manufacturing, and increases the weight and manufacturing cost.

### Summary of the Invention

The present application provides a battery and an electrical apparatus. The battery is capable of simplifying the preparation process, reducing costs, and achieving a lightweight design while meeting requirements of position-limiting fixation and resistance to an expansive force.

In a first aspect, embodiments of the present application provide a battery, including a box body, a battery group, and a position-limiting member. The battery group is arranged in the box body. The battery group includes two or more battery cells arranged in a first direction. The battery cell includes a first side wall and a second side wall connected together. The first side wall is a wall having the largest area among all outer walls of the battery cell. The second side walls of two adjacent battery cells are arranged opposite to each other in the first direction. The position-limiting member is fixedly connected to the box body and abuts against the first side wall of the battery cell. The position-limiting member is used for limiting deformation of the battery cell in a second direction, and the second direction is perpendicular to the first side wall.

In the embodiments of the present application, by arranging the position-limiting member, it is fixedly connected to the box body and abuts against the first side wall of the battery cell, so as to meet the position-limiting and fixing effects on the battery cell. At the same time, the position-limiting member is capable of limiting the deformation of the battery cell in the second direction, which is beneficial to buffering the expansion of the battery cell and ensuring the safety performance of the battery. Moreover, arranged in this way, there is no need to arrange end plates and other connecting members, which is conducive to improving the mounting efficiency and mounting accuracy, thereby simplifying the preparation process, reducing production costs and the overall weight of the battery, and achieving a lightweight design. In addition, the first side wall is the wall having the largest area among all the outer walls of the battery cell, the position-limiting member is capable of better performing position-limiting and fixing on the battery cell and resisting expansion deformation. Furthermore, the arranging of the position-limiting member is further capable of improving the overall structural strength of the battery, thereby better ensuring the safety performance of the battery.

In some embodiments, in a height direction of the box body, a height dimension of the position-limiting member is H, a height dimension of the battery cell is h, and 2/3≤H/h≤11/10.

When H/h is too large, the internal space of the battery may be wasted and the energy density may be too low. When H/h is too small and cannot meet the structural strength of the battery, a case of the battery cell may crack after expansion, and even safety accidents such as fire and explosion may occur. H/h is set between 2/3 and 11/10, and includes two end values of 2/3 and 11/10, which can not only meet the structural strength and the expansion resistance effect, but also save space, improve the space utilization, and increase the energy density of the battery.

In some embodiments, in the height direction of the box body, the height dimension of the position-limiting member is H, the height dimension of the battery cell is h, and 0.9≤H/h≤1.

H/h is set between 0.9 and 1 and includes two end values of 0.9 and 1, which is conducive to better meeting the structural strength and the expansion resistance effect, and improving the safety and reliability, and is further conducive to better improving the energy density of the battery.

In some embodiments, the position-limiting member includes a position-limiting beam, the position-limiting beam extends in the first direction, both ends of the position-limiting beam in in the first direction are connected to the box body, and the position-limiting beam abuts against the first side wall of the battery cell and is connected to the first side wall.

Arranged in this way, the position-limiting member is arranged in the form of a position-limiting beam, which is conducive to saving its layout space, allowing the box body to accommodate more battery cells, improving the space utilization of the box body. Moreover, the position-limiting beam is connected to the box body, which is capable of improving the overall structural strength of the box body, improving the ability to resist the expansion of the battery cells, and ensuring the safety performance.

In some embodiments, the position-limiting beam is provided with a plurality of cavities penetrating in the first direction therein.

Arranged in this way, the space inside the cavity is conducive to being compressed in the second direction so that the position-limiting beam is capable of limiting the deformation of the battery cell, buffering and absorbing the expansive force of the battery cell, thereby ensuring the safety performance of the battery cell. In addition, the arrangement of the cavity can further reduce the weight of the position-limiting beam, reduce costs, achieve the lightweight design, and at the same time is capable of improving the overall energy density of the battery.

In some embodiments, the quantity of the position-limiting beams is two, the two position-limiting beams are arranged at an interval in the second direction, and the battery group is clamped between the two position-limiting beams.

Arranged in this way, the position-limiting beam is capable of better meeting the requirements of position-limiting fixation and resistance to expansion, thereby ensuring the safety performance of the battery.

In some embodiments, the quantity of the battery groups is two or more, and the two or more battery groups are arranged in the second direction. A partition is arranged between two adjacent battery groups, and the partition is connected to the first side walls of the battery cells in the two adjacent battery groups.

Arranged in this way, the partition can be used as a structural member of the box body. By arranging the partition between two adjacent battery groups and connecting the partition to the first side walls of the battery cells, the partition is capable of being more easily achieving at least one of functions of improving the structural strength and resisting the expansive force.

In some embodiments, the partition is adhered and fixed to the first side walls of the battery cells in the two adjacent battery groups.

Arranged in this way, it is conducive to improving the connection strength and connection stability between the partition and the battery cells, thereby ensuring the safety and reliability of the battery. In addition, the partition and the battery cells are integrally connected by bonding, so that the partition and the battery cells of the battery groups can be bonded together and then mounted into the box body as a whole, which facilitates the assembling of batteries into groups and can also make adjacent battery groups more compact to improve the space utilization efficiency of the box body.

In some embodiments, the partition is used for adjusting the temperature of the battery cell, and a medium flow channel is arranged in the partition.

Through the above arrangement, the partition can not only perform thermal management of the battery cells, but also is capable of serving as a structural member of the box body to improve the overall structural strength of the battery, thereby eliminating horizontal and vertical beams mounted inside the box body, resulting in high integration and reduced cost, improving the space utilization of the box body, and achieving the lightweight design.

In some embodiments, the battery further includes a communication channel, an inlet pipe, and an outlet pipe. In the second direction, the medium flow channels of two adjacent partitions are in communication with each other through the communication channel. The inlet pipe and the outlet pipe are in communication with the medium flow channel of the same partition.

Arranged in this way, each partition can meet the requirement for a heat exchange medium through only one inlet pipe and one outlet pipe, thereby reducing the space occupation rate, and being capable of simplifying the structures of the inlet pipe and outlet pipe, which facilitates assembling and replacement, and is applicable to the supply of heat exchange media for different quantities of partitions, thereby improving the flexibility and versatility.

In some embodiments, the box body is provided with a through hole, and the inlet pipe and the outlet pipe respectively extend out of the box body through the through hole.

Arranged in this way, the inlet pipe and the outlet pipe is capable of extending to the outside of the box body through the through hole, that is, the external heat exchange medium is capable of entering the box body through the inlet pipe and flowing out of the box body through the outlet pipe, which facilitates acquisition and discharge of the heat exchange medium, and is also capable of reducing the risk of leakage of the heat exchange medium in the box body, thereby ensuring the safety and reliability of the battery.

In some embodiments, the box body includes a top cover, a bottom cover, and an accommodating frame. The bottom cover and the top cover are relatively arranged at both ends of the accommodating frame in the height direction of the box body. The position-limiting member is connected to the accommodating frame and at least one of the top cover and the bottom cover respectively.

The top cover, the bottom cover, and the accommodating frame form the box body accommodating the battery cells to ensure sealing requirements and facilitate processing, manufacturing, and assembling. The position-limiting member is connected to the accommodating frame and at least one of the top cover and the bottom cover respectively, which is conducive to improving the structural strength, and is also capable of setting the overall structure of the battery according to different needs to improve the universality.

In some embodiments, the box body further includes a connecting seat, the connecting seat is arranged to protrude from the accommodating frame in the first direction, and the connecting seat is used for mounting the battery on the electrical apparatus.

By arranging the connecting seat, the connection and fixation of the entire battery in the electrical apparatus to which it is applied is facilitated, thereby ensuring the safety performance of the battery.

In some embodiments, the battery further includes a busbar and an output member base. The busbar is electrically connected to the battery cell. The output member base is arranged on the position-limiting member and used for supporting the busbar.

Arranged in this way, the busbar is electrically connected to the battery cell, and the output member base forms an output interface to connect to an external electrical apparatus, which facilitates the mounting and fixation of the busbar, avoids contact short circuits, and ensures the safety performance of the battery.

In some embodiments, the position-limiting member is provided with an accommodating groove, and the output member base at least partially extends into the accommodating groove.

Arranged in this way, the accommodating groove is capable of playing a position-limiting role on the output member base to prevent its displacement from causing safety problems for the battery. At the same time, it can also play a positioning role to facilitate the mounting of the output member base and improve the production efficiency.

In some embodiments, in the height direction of the box body, the battery cell is formed with an electrode terminal at one end close to the bottom cover, and a surface of the battery cell away from the electrode terminal is connected to the top cover.

Arranged in this way, when the battery cell is assembled to an electrical apparatus (such as a vehicle), it can be placed upside down so that the electrode terminal of the battery cell faces downward, and the surface of the battery cell away from the electrode terminal is connected to the top cover, which can improve the utilization rate of the box body in the height direction and ensure the personal safety of a driver. Moreover, by using the above arrangement, the battery cells are clamped by a clamp and the battery cells connected into a whole are inverted and put into the box body, and since the electrode terminal of the battery cell is located at one end arranged away from the top cover, it is capable of preventing the clamp from interfering with the electrode terminal and preventing its failure or even damage, thereby ensuring the safety performance of the battery. In addition, placing the battery cells upside down in the box body helps improve the assembling efficiency and is simple in operation.

In some embodiments, the battery further includes a buffer member, and the buffer member is arranged between the electrode terminal and the bottom cover in the height direction.

By providing the buffer member, when the battery as a whole encounters bumps or vibrations, the buffer member can be used to buffer the electrode terminals of the battery cells to avoid scratches with the bottom and damage to a pressure relief mechanism and other structures, thereby ensuring the safety performance of the battery.

In a second aspect, the embodiments of the present application provide an electrical apparatus, including the battery in any one of the above embodiments, and the battery being used for supplying electric energy so that the electrical apparatus is capable of running normally.

### Description of Drawings

In order to illustrate the technical solutions of the embodiments of the present application more clearly, the following briefly introduces the drawings required in the embodiments of the present application. Obviously, the drawings described below are only some embodiments of the present application. For those of ordinary skill in the art, other drawings may also be obtained according to the drawings without any creative efforts.
Fig. 1 is a schematic structural diagram of a vehicle according to an embodiment of the present application;
Fig. 2 is a schematic exploded diagram of a battery according to an embodiment of the present application;
Fig. 3 is a schematic structural diagram of a battery cell in a battery according to an embodiment of the present application;
Fig. 4 is a schematic exploded diagram of a battery cell in a battery according to an embodiment of the present application;
Fig. 5 is a schematic structural diagram of a position-limiting beam in a battery according to an embodiment of the present application;
Fig. 6 is a partial top diagram of a battery according to an embodiment of the present application;
Fig. 7 is a schematic structural diagram of a partition in a battery according to an embodiment of the present application; and
Fig. 8 is a cross-sectional diagram of the partition shown in Fig. 7 in a first direction.

In the drawings, the drawings are not drawn to actual scale.

In the drawings:
1000-Vehicle; 100-Battery; 200-Controller; 300-Motor;
10-Box body; 10a-Opening; 10b-Through hole; 11-Bottom cover; 12-Accommodating frame; 13-Connecting seat;
20-Battery group; 21-Battery cell; 211-First side wall; 212-Second side wall; 201-End cover assembly; 201a-Electrode terminal; 202-Case; 203-Electrode assembly; 203a-Positive tab; 203b-Negative tab; 30-Top cover;
40-Position-limiting member; 41-Position-limiting beam; 40a-Cavity; 40b-Accommodating groove;
50-partition; 50a-Medium flow channel; 51b-Top wall; 51c-Bottom wall; 51d-Side wall; 511-Supporting assembly; 5111-First supporting member; 5112-Second supporting member;
61-Communication channel; 62-Inlet pipe; 63-Outlet pipe;
71-busbar; 72-Output member base;
X-First direction; Y-Second direction; Z-Height direction.

### Detailed Description

Embodiments of the technical solutions of the present application may be described in detail below with reference to the drawings. The following embodiments are only used to more clearly illustrate the technical solution of the present application, and therefore are only used as examples and cannot be used to limit the scope of protection of the present application.

It should be noted that, unless otherwise specified, the technical or scientific terms used in the embodiments of the present application should have the usual meanings as understood by those skilled in the art to which the embodiments of the present application belong.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In addition, the technical terms "first," "second," etc. are used for descriptive purposes only, and cannot be construed as indicating or implying a relative importance, or implicitly specifying the number of the indicated technical features. In the description of the embodiments of the present application, the meaning of "a plurality of" is two or more, unless otherwise explicitly and specifically defined.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

In the description of the embodiments of the present application, unless otherwise explicitly specified and defined, the expression a first feature being "on" or "under" a second feature may be a case that the first feature is in direct contact with the second feature, or the first feature is in indirect contact with the second feature via an intermediate medium. Furthermore, the expression the first feature being "over," "above" and "on top of" the second feature may be a case that the first feature is directly above or obliquely above the second feature, or only means that the level of the first feature is higher than that of the second feature. The expression the first feature being "below," "underneath," or "under" the second feature may be a case that the first feature is directly underneath or obliquely underneath the second feature, or only means that the level of the first feature is lower than that of the second feature.

At present, from the perspective of the development of the market situation, power batteries are increasingly more widely used. The power batteries are used not only in energy storage power source systems such as hydraulic, thermal, wind, and solar power stations, but also in electric vehicles such as electric bicycles, electric motorcycles, and electric cars, as well as a plurality of fields such as military equipment and aerospace. With the continuous expansion of the application field of the power batteries, the market demand thereof is also constantly expanding.

The applicant noticed that there are a large number of battery cells inside existing batteries, and they are generally assembled into battery groups first and then assembled. The battery group includes a plurality of stacked battery cells. End plates are usually arranged at both ends of the battery group. The two end plates are connected through a connecting member to fasten the battery cells. In addition, in order to prevent expansion of the battery cells that occurs during charging and discharging from causing damage to the end plates, and more reinforcement structures are often arranged to improve the structural strength of the end plates. However, this method requires a large number of components, is complicated to manufacture, and increases the weight and manufacturing cost, thereby increasing the manufacturing cost of the battery.

In order to simplify the preparation process, reduce costs, and achieve lightweight design while being capable of meeting the requirements of position-limiting fixation and resistance to the expansive force, the applicant finds through research that the structure and layout of the battery can be improved.

Based on the above considerations, in order to simplify the preparation process, reduce costs, and lighten the design while meeting the position-limiting fixation and resistance to the expansive force, the applicant designs a battery after in-depth research, including a box body, a battery group, and a position-limiting member. The battery group is arranged in the box body. The battery group includes two or more battery cells arranged in a first direction. The battery cell includes a first side wall and a second side wall connected together. The first side wall is a wall having the largest area among all outer walls of the battery cell. The second side walls of two adjacent battery cells are arranged opposite to each other in the first direction. The position-limiting member is fixedly connected to the box body and abuts against the first side wall of the battery cell. The position-limiting member is used for limiting deformation of the battery cell in a second direction, and the second direction is perpendicular to the first side wall.

In such a battery, the battery group is placed inside the box body to meet sealing requirements. The battery group includes two or more battery cells arranged in the first direction. The second side walls of two adjacent battery cells are arranged oppositely. The position-limiting member is fixedly connected to the box body, and the position-limiting member abuts against the first side wall of the battery cell to limit the deformation of the battery cell in the second direction, which is beneficial to buffering the expansion of the battery cells and ensuring the safety performance of the battery. At the same time, it is capable of providing a pressing force on the battery group to achieve the function of position-limiting fixation, thereby ensuring that the battery is of good quality. In addition, the position-limiting member is fixedly connected to the box body and arranged to abut against the battery cell, which can also reduce the number of connecting members and the like, which is conducive to improving the mounting efficiency and the mounting accuracy, thereby simplifying the preparation process, reducing production costs and the overall weight of the battery, and achieving the lightweight design. In addition, arranged in this way, the position-limiting member can also be used as a structural member of the box body to meet the structural strength requirements and achieve a high degree of integration.

The technical solutions described in the embodiments of the present application are applicable to electrical apparatuses using batteries.

The electrical apparatus may be, but not limited to, a vehicle, a mobile phone, a portable device, a laptop computer, a ship, a spacecraft, an electric toy, an electric tool, and the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys, and electric aircraft toys. The electric tool includes metal cutting electric tools, grinding electric tools, assembly electric tools, and railway electric tools, such as electric drills, electric grinders, electric wrenches, electric screwdrivers, electric hammers, impact drills, concrete vibrators and electric planers. The electrical apparatus is not specially limited in the embodiments of the present application.

It should be understood that the technical solutions described in the embodiments of the present application are not only applicable to the electrical apparatuses described above, but also applicable to all electrical apparatuses using batteries. However, for the sake of brevity, the following embodiments are described by taking an electric vehicle as an example.

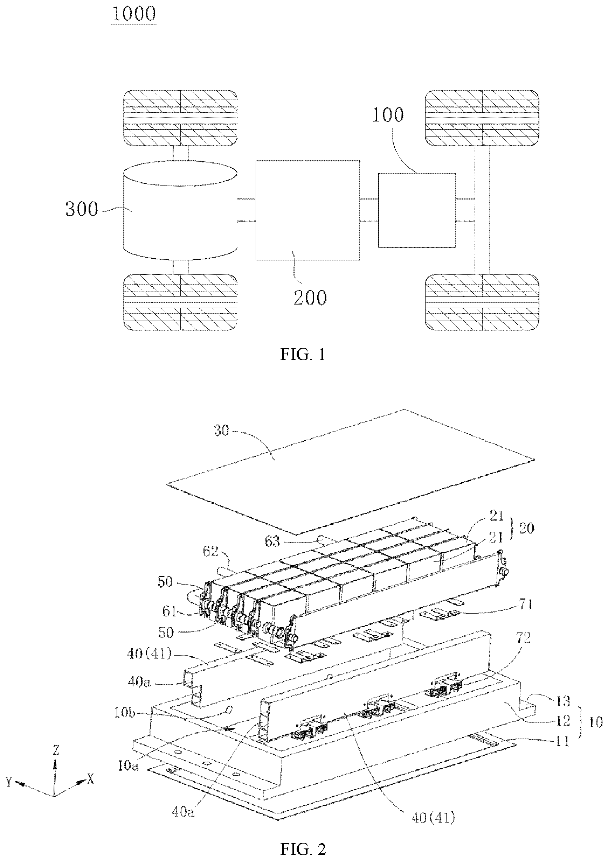

Referring to Fig. 1, Fig. 1 is a schematic structural diagram of a vehicle 1000 according to some embodiments of the present application. The vehicle 1000 may be a fuel vehicle, a gas vehicle, or a new energy vehicle, and the new energy vehicle may be an all-electric vehicle, a hybrid electric vehicle, an extended range electric vehicle, or the like. The interior of the vehicle 1000 is provided with a battery 100, and the battery 100 may be arranged at the bottom or head or tail of the vehicle 1000. The battery 100 may be used to power the vehicle 1000. For example, the battery 100 may be used as an operating power source of the vehicle 1000. The vehicle 1000 may further include a controller 200 and a motor 300. The controller 200 is used for controlling the battery 10 to power the motor 300, for example, for meeting operating power requirements when the vehicle 1000 is starting, navigating and driving.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to Fig. 2 to Fig. 4, the embodiments of the present application provide a battery 100, including a box body 10, a battery group 20, and a position-limiting member 40. The battery group 20 is arranged in the box body 10. The battery group 20 includes two or more battery cells 21 arranged in a first direction X. The battery cell 21 includes a first side wall 211 and a second side wall 212 connected together. The first side wall 211 is a wall having the largest area among all outer walls of the battery cell 21. The second side walls 212 of two adjacent battery cells 21 are arranged opposite to each other in the first direction X. The position-limiting member 40 is fixedly connected to the box body 10 and abuts against the first side wall 211 of the battery cell 21. The position-limiting member 40 is used for limiting deformation of the battery cell 21 in a second direction Y, and the second direction Y is perpendicular to the first side wall 211.

The box body 10 may be a simple three-dimensional structure such as a single rectangular parallelepiped or a cylinder, or a complex three-dimensional structure composed of simple three-dimensional structures such as a rectangular parallelepiped or a cylinder, which is not limited in the embodiments of the present application. The material of the box body 10 may be an alloy material such as aluminum alloy and iron alloy, or may be a polymer material such as polycarbonate and polyisocyanurate foamed plastic, or a composite material such as glass fiber and epoxy resin, which is not limited in the embodiments of the present application.

The box body 10 is used for accommodating the battery cells 21. The box body 10 may be of various structures, as long as the sealing requirements are ensured.

There may be one or a plurality of battery cells 21 in the battery 100. If there are a plurality of battery cells 21, the plurality of battery cells 21 may be in series connection, parallel connection, or parallel-series connection, wherein the parallel-series connection means that the plurality of battery cells 21 are in both series connection and parallel connection. The plurality of battery cells 21 can be directly in series connection, parallel connection, or parallel-series connection, and then the whole composed of the plurality of battery cells 21 may be accommodated in the box body 10. Of course, the plurality of battery cells 21 may also be in series connection, parallel connection, or parallel-series connection first to form battery groups 20, and the plurality of battery groups 20 may then be in series connection, parallel connection, or parallel-series connection to form a whole body, and be accommodated in the box body 10.

In the present application, the battery cell 21 may include a lithium-ion battery cell 21, a sodium-ion battery cell 21, a magnesium-ion battery cell 21, or the like, which is not limited in the embodiments of the present application. The battery cells 21 may be flat, rectangular, or in other shapes, which is also not limited in the embodiments of the present application. The battery cells 21 are generally classified into three types according to packaging manners: cylindrical battery cells 21, rectangular battery cells 21, and pouch cells 21, which are not limited in the embodiments of the present application. However, for the sake of simplicity of description, the following embodiments are illustrated by taking the rectangular battery cell 21 as an example.

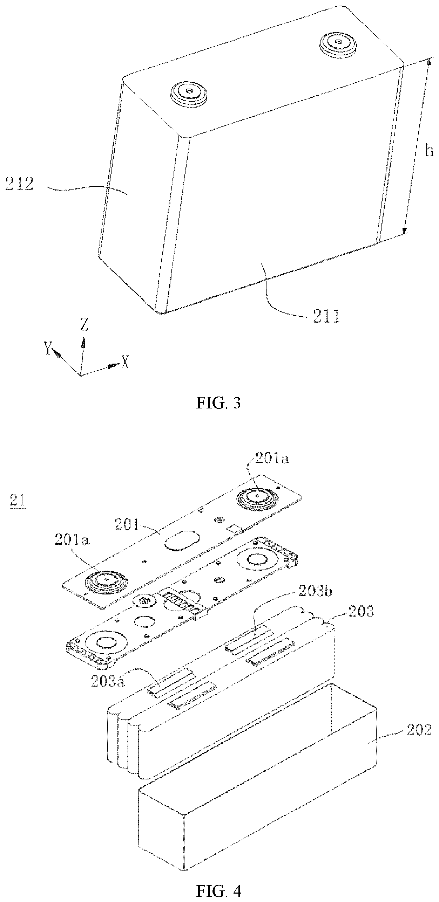

Referring to FIG. 4, the battery cell 21 refers to the smallest unit that constitutes the battery 100. The battery cell 21 includes an end cover assembly 201, a case 202, and an electrode assembly 203.

The end cover assembly 201 refers to a component that covers an opening of the case 202 to isolate an internal environment of the battery cell 21 from an external environment. Without limitation, the shape of the end cover assembly 201 may be adapted to the shape of the case 202 to fit the case 202. Optionally, the end cover 201 may be made of a material with a certain hardness and strength (such as aluminum alloy). In this way, the end cover assembly 201 is less likely to deform when subjected to extrusion and collision, so that the battery cell 21 is capable of having have higher structural strength, and the safety performance can also be improved. The end cover assembly 201 may be provided with a functional component such as an electrode terminal 201a. The electrode terminal 201a may be used for being electrically connected to the electrode assembly 203, for outputting or inputting electrical energy of the battery cell 21. In some embodiments, the end cover assembly 201 may be further provided with a pressure relief mechanism used for relieving an internal pressure when the internal pressure or the temperature of the battery cell 21 reaches a threshold. The end cover assembly 201 may be made of various materials, such as copper, iron, aluminum, stainless steel, aluminum alloy, and plastic, which is not particularly limited in the embodiments of the present application. In some embodiments, an insulating member may also be arranged on an inner side of the end cover assembly 201, and the insulating member may be used for isolating the electrical connection component in the case 202 from the end cover assembly 201 to reduce the risk of short circuit. For example, the insulating member may be plastic, rubber, and the like.

The case 202 is a component used for fitting the end cover assembly 201 to form an internal environment of the battery cell 21, wherein the internal environment formed may be used to accommodate the electrode assembly 203, an electrolyte solution (not shown in the figure), and other components. The case 202 and the end cover assembly 201 may be independent components, and an opening may be arranged on the case 202. The end cover assembly 201 is made to cover the opening at the opening to form the internal environment of the battery cell 21. Without limitation, the end cover assembly 201 and the case 202 may also be integrated. Specifically, the end cover assembly 201 and the case 202 may form a common connection surface before other components are put into the case. When the interior of the case 202 needs to be packaged, the end cover assembly 201 is then made to cover the case 202. The case 202 may be of various shapes and sizes, such as a rectangular parallelepiped. Specifically, the shape of the case 202 may be determined according to the specific shape and dimension magnitude of the electrode assembly 203. The case 202 may be made of various materials, such as copper, iron, aluminum, stainless steel, aluminum alloy, and plastic, which is not particularly limited in the embodiments of the present application.

The electrode assembly 203 is a component in which an electrochemical reaction occurs in the battery cell 21. One or a plurality of electrode assemblies 203 may be accommodated in the case 202. The electrode assembly 203 is mainly formed by winding or stacking a positive electrode plate and a negative electrode plate, and usually a separator is arranged between the positive electrode plate and the negative electrode plate. The portions of the positive electrode plate and the negative electrode plate that contain active material constitute a main body part of the electrode assembly 203, and the portions of the positive electrode plate and the negative electrode plate that do not contain active material constitute tabs respectively. A positive tab 203a and a negative tab 203b may be located together at one end of the main body part or respectively located at both ends of the main body part. In the charging and discharging process of the battery 100, the positive electrode active material and the negative electrode active material react with the electrolyte solution, and the tabs are connected to the electrode terminals 201a to form a current loop.

Still referring to Fig. 2 to Fig. 4, the battery group 20 provided in the embodiments of the present application includes two or more battery cells 21 arranged in the first direction X. The battery cell 21 includes the first side wall 211 and the second side wall 212 connected together. The first side wall 211 is a wall having the largest area among all outer walls of the battery cell 21. The second side walls 212 of two adjacent battery cells 21 are arranged opposite to each other in the first direction X. The position-limiting member 40 is fixedly connected to the box body 10 and abuts against the first side wall 211 of the battery cell 21. The position-limiting member 40 is used for limiting the deformation of the battery cell 21 in the second direction Y

In the embodiment of the present application, the second direction Y is perpendicular to the first side wall 211. It is understandable that the second direction Y is also perpendicular to the first direction X. Alternatively, the first direction X may be the length direction of the box body 10, and correspondingly, the second direction Y may be the width direction of the box body 10. Of course, the first direction X may also be the width direction of the box body 10, and correspondingly, the second direction Y may be the length direction of the box body 10.

Optionally, the quantity of the position-limiting members 40 may be one, two, or, of course, a plurality of.

The position-limiting member 40 is fixedly connected to the box body 10 and abuts against the first side wall 211 of the battery cell 21, which is capable of limiting the deformation of the battery cell 21 in the second direction Y. When the battery cell 21 expands during charging and discharging, it may buffer the battery cell 21 and provide a force in a direction opposite to the expansive force, which is conducive to improving the operating safety of the battery cell 21, thereby ensuring the safety and reliability of the battery 100. At the same time, it is capable of providing a pressuring force for the battery group 20 to achieve the function of position-limiting fixation, thereby ensuring that the battery 100 has good quality.

Moreover, arranged in this way, end plates and connecting members can be reduced, which is conducive to improving the mounting efficiency and mounting accuracy, thereby simplifying the preparation process, reducing production costs and the overall weight of the battery 100, and achieving a lightweight design.

In addition, the position-limiting member 40 may also be used as a structural member of the box body 10 to meet the structural strength requirements, which has a high degree of integration, and the position-limiting member 40 and the battery cell 21 are made more closely attached to each other, thereby being conducive to improving the compactness and improving the space utilization of the box body 10.

By setting the first side wall 211 as the wall having the largest area among all the outer walls of the battery cell 21, the position-limiting member 40 is capable of better performing position-limiting fixation on the battery cell 21, resisting the expansion deformation, and improving the structural strength, thereby better ensuring the safety performance of the battery 100.

For example, two position-limiting members 40 may be arranged, and the two position-limiting members 40 are respectively fixedly connected between the box body 10 and the first side wall 211 of the battery cell 21 and abut against the first side wall 211. It can not only achieve position-limiting fixation to the battery cell 21 and resistance to the expansive force, but also prevent the battery cell 21 from contacting the box body 10 to prevent electrical connection or thermal runaway. At the same time, the position-limiting member 40 can further provide supporting and protection functions for the battery cell 21, and improve the structural strength.

Optionally, the position-limiting member 40 and the box body 10 may have an integrated structure and be formed through processes such as bending and stamping. Of course, the position-limiting member 40 and the box body 10 may also be provided separately, and then fixedly connected as a whole through welding, bonding, or other methods.

The battery 100 provided in the embodiments of the present application is provided with the position-limiting member 40, which is fixedly connected to the box body 10 and abuts against the first side wall 211 of the battery cell 21, so as to achieve the position-limiting fixation function for the battery cell 21. At the same time, the position-limiting member 40 is capable of limiting the deformation of the battery cell 21 in the second direction Y to meet the requirement of resisting the expansion of the battery cell 21. Moreover, arranged in this way, there is no need to arrange end plates and connecting members for connecting the battery cell 21, which is conducive to improving the mounting efficiency and mounting accuracy, thereby simplifying the preparation process, reducing production costs and the overall weight of the battery 100, and achieving a lightweight design. In addition, the position-limiting member 40 can also be used as a structural member of the box body 10 to support the battery cell 21, which is beneficial to improving the structural strength. Further, since the first side wall 211 is the wall having the largest area among all the outer walls of the battery cell 21, the position-limiting member 40 is capable of better performing position-limiting fixation on the battery cell 21, resisting the expansion deformation, and improving the structural strength, thereby better ensuring the safety performance of the battery 100.

The battery 100 provided in the embodiment of the present application adopts the above structural form. When forming, the second side walls 212 of various battery cells 21 of the same battery group 20 may be arranged opposite to each other to form the battery group 20 including two or more battery cells 21a arranged in the first direction X. Then, the battery group 20 is clamped by a tool and put into the box body 10 between the position-limiting members 40 arranged at an interval in the second direction Y. After the tool is removed, each battery cell 21 in the battery group 20 rebounds and abuts against the position-limiting member 40, so that the position-limiting member 40 abuts against the first side wall 211 of the battery cell 21, and the box body 10 is closed to complete the preparation of the battery 100. Through this molding method, it is capable of improving the space utilization of the box body 10 and achieving a lightweight design while meeting the requirements of position-limiting fixation and resisting expansive deformation, and it is also simple to prepare, facilitates molding, and reduces costs.

Referring to Fig. 2 to Fig. 5, in some embodiments, in a height direction Z of the box body 10, a height dimension of the position-limiting member 40 is H, a height dimension of the battery cell 21 is h, and 2/3≤H/h≤11/10.

Optionally, a ratio of the height dimension H of the position-limiting member 40 to the height dimension h of the battery cell 21 may be any value between 2/3 and 11/10, including two end values of 2/3 and 11/10.

Referring to the table below, the table is a test result table when H/h is in a value range of 2/3 to 11/10:

| No. | h/mm | H/mm | H/h | Test result |
|---|---|---|---|---|
| 1 | 84 | 40 | 0.5 | The case of the battery cell is cracked, and the welding seam of the position-limiting member is cracked |
| 2 | 84 | 56 | 0.67 | The position-limiting members are not damaged, do not catch fire or explode |
| 3 | 84 | 75.6 | 0.9 | The position-limiting members are not damaged, do not catch fire or explode |
| 4 | 112.5 | 112.5 | 1 | The position-limiting members are not damaged, do not catch fire or explode |
| 5 | 84 | 92.4 | 1.1 | The position-limiting members are not damaged, do not catch fire or explode |

For example, as can be seen from the second to fifth test data in the table, the height dimension H of the position-limiting member 40 and the height dimension h of the battery cell 21 are set to be within the range of 2/3≤H/h≤11/10, and the test results show that the position-limiting members 40 are not damaged and the battery cells 21 may not cause safety problems. Moreover, an abutting area between the position-limiting member 40 and the first side wall 211 of the battery cell 21 is capable of being increased, so that the position-limiting member 40 is capable of better limiting the deformation of the battery cell 21 in the second direction Y, thereby improving its position-limiting and supporting functions on the battery cell 21 and the effect of resisting expansive deformation, and improving the safety and reliability of the battery 100.

For example, as can be seen from the fourth to fifth test data in the table, the height dimension H of the position-limiting member 40 is set to be greater than or equal to the height dimension h of the battery cell 21, that is 1≤H/h≤11/10, and the test results show that the position-limiting members 40 are not damaged and the battery cells 21 may not cause safety problems. Moreover, arranged in this way, it is being capable of not only improving the position-limiting and supporting functions on the battery cell 21 and the effect of resisting expansive deformation, but also protecting the battery cell 21 through the position-limiting member 40 to prevent a force generated by external collision, vibration, or another working condition from directly acting on the battery cell 21, which can strengthen the structural strength of the battery cell 21 and the position-limiting member 40, thereby improving the structural strength of the battery 100.

If H/h is set to be greater than 11/10, the internal space of the box body 10 may be wasted, thereby reducing the energy density of the battery 100.

If H/h is set to be less than 2/3, as can be seen from the first test data in the table, the test result is that the position-limiting member 40 is cracked and the battery cell 21 has safety problems. In other words, this setting may cause that the abutting area between the first side wall 211 of the battery cell 21 and the position-limiting member 40 is too small to meet the structural strength, and the position-limiting member 40 cannot effectively resist the expansion of the battery cell 21, which may cause safety accidents such as fire and explosion.

Therefore, based on simulation calculations, H/h is set between 2/3 and 11/10, including the two end values of 2/3 and 11/10, which can not only meet the structural strength and expansion resistance effect, but also save space and improve the space utilization.

In some embodiments, in the height direction Z of the box body 10, the height dimension of the position-limiting member 40 is H, the height dimension of the battery cell 21 is h, and 0.9≤H/h≤1.

Based on the test results of the above table, setting H/h between 0.9 and 1 is conducive to better meeting the structural strength and the expansion resistance effect, and improving the safety and reliability, and is further conducive to better improving the energy density of the battery 100.

In some embodiments, the position-limiting member 40 includes a position-limiting beam 41, the position-limiting beam 41 extends in the first direction X, both ends of the position-limiting beam 41 in the first direction X are connected to the box body 10, and the position-limiting beam 41 abuts against the first side wall 211 of the battery cell 21 and is connected to the first side wall 211.

Setting the position-limiting member 40 in the form of the position-limiting beam 41 is beneficial to reducing the layout space of the position-limiting beam 41, thereby allowing the box body 10 to accommodate more battery cells 21, and improving the utilization of the internal space of the box body 10.

Furthermore, the connection between the position-limiting beam 41 and the box body 10 is capable of improving the overall structural strength of the box body 10, improving the ability to resist expansion of the battery cell 21, and ensuring the safety performance.

The connection between the position-limiting beam 41 and the first side wall 211 may be a direct fitting connection between the position-limiting beam 41 and the first side wall 211, or the position-limiting beam 41 may be connected to the first side wall 211 by an adhesive, a fastener (such as a bolt), welding, and another manner. Alternatively, there may also be another component (such as the partition 50 below) between the position-limiting beam 41 and the first side wall 211, and the position-limiting beam 41 abuts against the first side wall 211 through another component and is indirectly connected to the first side wall 211.

For example, cross-sectional areas of various parts of the position-limiting beam 41 in the first direction X are the same, which facilitates production and saves the internal space of the box body 10. Moreover, it is advantageous to make each part of the position-limiting beam 41 to closely fit the first side walls 211 of various battery cells 21, for improving the supporting and protection functions and improving the utilization of the internal space of the box body 10.

In some embodiments, a plurality of cavities 40a penetrating in the first direction X are arranged in the position-limiting beam 41.

Optionally, the plurality of cavities 40a may be arranged at intervals in the second direction Y, and of course, may also be arranged at intervals in the height direction Z.

Alternatively, in the height direction Z, the plurality of cavities 40a may be arranged in one column, and of course, a plurality of columns may also be arranged.

For example, a plurality of cavities 40a are arranged at intervals in the height direction Z and arranged in one column to reduce the extension length of the position-limiting beam 41 in the second direction Y, so that there is more space in the box body 10 for accommodating more battery cells 21, thereby being beneficial to increasing the energy density of the battery 100.

By arranging the plurality of cavities 40a penetrating the position-limiting beam 41 in the first direction X, when the battery cell 21 expands during charging and discharging, the space in the cavities 40a is conducive to being compressed in the second direction Y so that the position-limiting beam 41 is capable of limiting the deformation of the battery cell 21, and buffering and absorbing the expansive force of the battery cell 21, thereby ensuring the safety performance of the battery cell 21.

In addition, the arrangement of the cavities 40a can further reduce the weight of the position-limiting beam 41, reduce costs, achieve the lightweight design, and at the same time is capable of improving the overall energy density of the battery 100.

In some embodiments, there are two position-limiting beams 41, and the two position-limiting beams 41 are arranged at an interval in the second direction Y. The battery group 20 is clamped between the two position-limiting beams 41.

For example, there are two position-limiting beams 41 arranged at an interval in the second direction Y. The battery group 20 is clamped between the two position-limiting beams 41, that is, the position-limiting beams 41 are located between the battery group 20 and the inner wall of the box body 10. The position-limiting beams 41 are connected to the first side wall 211 of the battery cell 21 and are arranged to abut against the first side wall 211. The two position-limiting beams 41 may be used respectively for limiting the deformation of the battery cell 21 in the second direction Y of the box body 10, and are capable of better meeting the requirements of position-limiting fixation and resistance to expansion, and better ensuring the safety performance of the battery 100.

Still referring to Fig. 2 to Fig. 5, in some embodiments, the quantity of the battery groups 20 is two or more, and the two or more battery groups 20 are arranged in the second direction Y. A partition 50 is arranged between two adjacent battery groups 20, and the partition 50 is connected to the first side walls 211 of the battery cells 21 in the two adjacent battery groups 20.

Optionally, the quantity of the battery groups 20 is two, or, of course, a plurality of.

Similarly, the quantity of the partition 50 may be set to one. When the quantity of the battery groups 20 is set to two, one partition 50 is sandwiched between the two battery groups 20. Of course, there may also be a plurality of partitions 50. When there are a plurality of battery groups 20, one partition 50 is sandwiched between every two adjacent battery groups 20.

Optionally, two or more battery groups 20 are arranged in the second direction Y Each battery group 20 includes two or more battery cells 21 distributed in the first direction X of the box body 10. The partition 50 is capable of preventing the battery cells 21 of two adjacent battery groups 20 in the second direction Y from being in direct contact, thereby avoiding problems such as short circuits.

Optionally, the partition 50 is connected to the first side walls 211 of various battery cells 21 in the two adjacent battery groups 20, which is capable of serving as a structural member of the box body 10 to support the battery cells 21 and improving the structural strength.

Optionally, the partition 50 may further be used for resisting the expansive force of the battery cells 21 connected thereto, thereby ensuring the safety performance of the battery 100.

Optionally, the partition 50 may further be used for performing thermal management on the battery cells 21 connected thereto, so as to ensure that the battery cells 21 are within a suitable temperature range, thereby ensuring the safety performance of the battery 100.

By clamping and connecting the partition 50 between two adjacent battery groups 20, the partition 50 is capable of better achieving at least one of the functions of improving structural strength and resisting the expansive force.

Optionally, the ratio of the height dimension of the partition 50 in the height direction Z to the height dimension h of the battery cell 21 may be set between 2/3 and 11/10, including both end values of 2/3 and 11/10, which is capable of not only meeting the structural strength and expansion resistance effects, but also saving space and improving the space utilization.

In some embodiments, the partition 50 is adhered and fixed to the first side walls 211 of the battery cells 21 in the two adjacent battery groups 20.

Arranged in this way, the connections between the partition 50 and various battery cells 21 are firmer and the connection stability is good, thereby ensuring the safety and reliability of the battery 100. In addition, the partition 50 and the battery cells 21 are integrally connected by bonding, so that the partition 50 and the battery cells 21 of the battery groups 20 can be bonded together and then mounted into the box body 10 as a whole, which facilitates the assembling of batteries 100 into groups and can also make adjacent battery groups 20 more compact to improve the space utilization efficiency of the box body 10.

In addition, the use of bonding may help reduce consumables and overall weight, and achieve a lightweight design of the battery 100. Furthermore, it may also simplify the manufacturing process, and improve the production efficiency and the assembly efficiency.

Optionally, a connecting glue layer may be arranged between the partition 50 and the first side wall 211 so that the partition 50 and the battery cells 21 are fixed by bonding.

Optionally, the connecting adhesive layer may include thermally conductive structural adhesive, which not only has good bonding effect, but also has thermal conductivity function, aging resistance, fatigue resistance, corrosion resistance, and other properties, and is capable of improving the connection strength between the battery cell 21 and the partition 50, so that heat is transferred more quickly between the battery cell 21 and the partition 50. Of course, the connecting adhesive layer further includes double-sided adhesive tape and the like.

In some embodiments, the partition 50 is used for adjusting the temperature of the battery cell 21, and a medium flow channel 50a is arranged in the partition 50.

Optionally, the partition 50 may be configured as a heat exchange plate. The heat exchange plate is sandwiched between two adjacent battery groups 20 and connected to the first side wall 211, so as to adjust, through this arrangement, the temperature of the battery cell 21 with which it contacts, thereby meeting the thermal management requirements of the battery cell 21. At the same time, the first side wall 211 is the wall having the largest area among all the outer walls of the battery cell 21, and therefore, it is capable of increasing a contact area of the heat exchange plate and the battery cell 21, thereby being conducive to improving the thermal management efficiency of the battery cell 21.

Each battery cell 21 may have two first side walls 211, that is, the two first side walls 211 of each battery cell 21 are respectively connected to the partition 50 to better improve the thermal management efficiency and ensure that the temperature of the battery cell 21 is stable.

The thermal management should be understood as that heat between the partition and the battery cell 21 can be transferred between the two. For example, the partition 50 is in direct contact with the battery cell 21 to achieve contact heat exchange, or a thermal conductive structure (such as thermal conductive glue) is arranged between the partition 50 and the battery cell 21 for heat exchange. Specifically, the partition is used to cool or heat the battery cell 21 to control the temperature of the battery cell 21 within an appropriate range, thereby improving the service life and safety performance of the battery cell 21. Moreover, when thermal runaway occurs in a certain battery cell 21, the heat generated by the battery cell 21 with thermal runaway may be taken away by the partition in contact with it, which reduces the temperature of the battery cell 21 with thermal runaway and prevents the thermal runaway problem from occurring in adjacent battery cells 21, thereby ensuring the safety performance of the battery cell 21.

Optionally, a partition 50 is sandwiched between two adjacent battery groups 20. It is understandable that one partition 50 is capable of acting on two battery groups 20 and exchange heat with them, and one battery group 20 is capable of performing heat exchange with two partitions 50, which is beneficial to improving the thermal management efficiency, and improving the safety and reliability of the battery cell 21.

A medium flow channel 50a is arranged in the partition 50, so that a heat exchange medium (such as water, air, and phase change material) is capable of flowing in the medium flow channel 50a to exchange heat with the battery cells 21, so as to achieve thermal management on the battery cells 21.

Through the above arrangement, the partition 50 is further capable of serving as a structural member of the box body 10 to improve the overall structural strength of the battery 100, thereby eliminating horizontal and vertical beams mounted inside the box body 10, resulting in high integration and reduced cost, improving the space utilization of the box body 10, and achieving the lightweight design. Furthermore, since the area of the first side wall 211 is larger than the area of the second side wall 212, the partition 50 is capable of better performing heat exchange with the battery cells 21, thereby improving the thermal management efficiency. In addition, by clamping the partition 50 between two adjacent battery groups 20, damage or even leakage of the partition 50 under working conditions such as collision and vibration can be avoided, which is beneficial to improving the use life, safety, and reliability of the partition 50, thereby improving the thermal management efficiency of the battery cell 21 and further ensuring the safety performance of the battery 100.

Referring to Fig. 2 to Fig. 6, in some embodiments, the battery 100 further includes a communication channel 61, an inlet pipe 62, and an outlet pipe 63. In the second direction Y, the medium flow channels 50a of two adjacent partitions 50 are in communication through the communication channel 61. The inlet pipe 62 and the outlet pipe 63 are in communication with the medium flow channel 50a of the same partition 50.

Optionally, the communication channel 61, the inlet pipe 62, and the outlet pipe 63 may be arranged on the same side of the partition 50 extending in the first direction X. Of course, they may also be arranged on both sides of the partition 50 extending in the first direction X respectively.

Optionally, an extension direction of the inlet pipe 62 and an extension direction of the outlet pipe 63 may be the same or different.

Optionally, the communication channel 61 may be arranged on each of both sides of the partition 50 extending in the first direction X, the communication channels 61 on both sides of each partition 50 are connection in sequence and are connected to the inlet pipe 62 and the outlet pipe 63 respectively, which facilitates assembling and replacement, and is more flexible.

Moreover, the communication channel 61, the inlet pipe 62, and the outlet pipe 63 may be randomly matched to adapt to various quantities of partitions 50, which is beneficial to improving the flexibility and versatility.

Optionally, connecting members may be arranged on both sides of the partition 50 extending in the first direction X, so as to be connected to the communication channel 61, thereby improving the connection strength.

Arranged in this way, the medium flow channel 50a of each partition 50 can meet the requirement for a heat exchange medium through only one inlet pipe 62 and one outlet pipe 63, thereby reducing the space occupation rate, and being capable of simplifying the structures of the inlet pipe 62 and outlet pipe 63, which facilitates assembling and replacement, and is applicable to the supply of heat exchange media for different quantities of partitions 50, thereby improving the flexibility and versatility.

In some embodiments, the box body 10 is provided with through holes 10b, and the inlet pipe 62 and the outlet pipe 63 respectively extend out of the box body 10 through the through holes 10b.

Arranged in this way, one ends of the inlet pipe 62 and the outlet pipe 63 are extended to the outside of the box body 10. The inlet pipe 62 is capable of being connected to an external device that provides the heat exchange medium, which facilitates acquiring the heat exchange medium and transporting it to the partition 50. The outlet pipe 63 is capable of being connected to the external device that stores the heat exchange medium, so as to discharge the heat exchange medium for performing heat exchange with the battery cell 21, which facilitates acquisition and discharge of the heat exchange medium, and is also capable of reducing the risk of leakage of the heat exchange medium in the box body 10, thereby ensuring the safety and reliability of the battery 100.

Optionally, the device that provides the heat exchange medium externally and the device that stores the heat exchange medium may be configured as the same device, or of course, they may also be two separate devices.

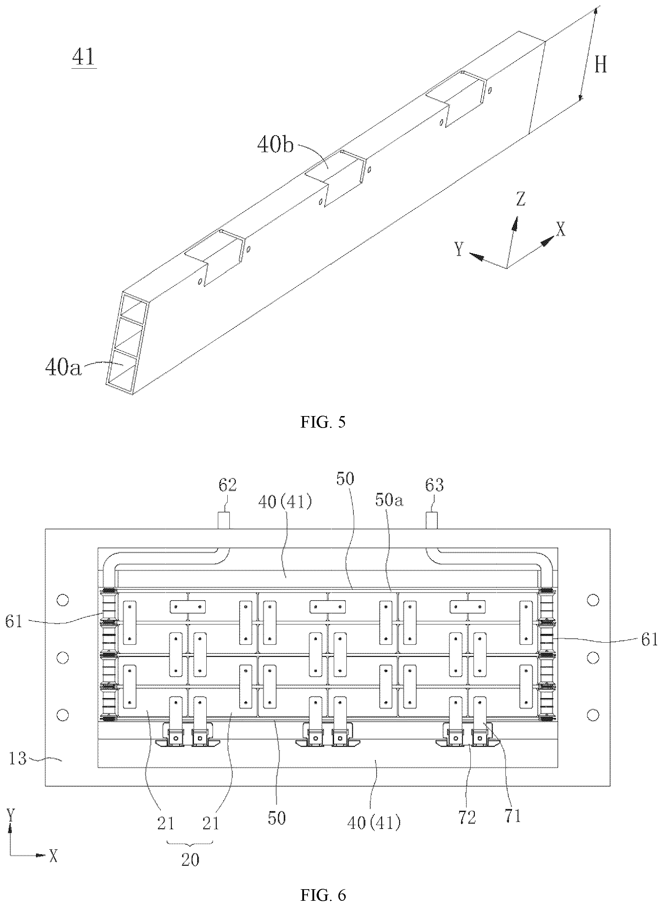

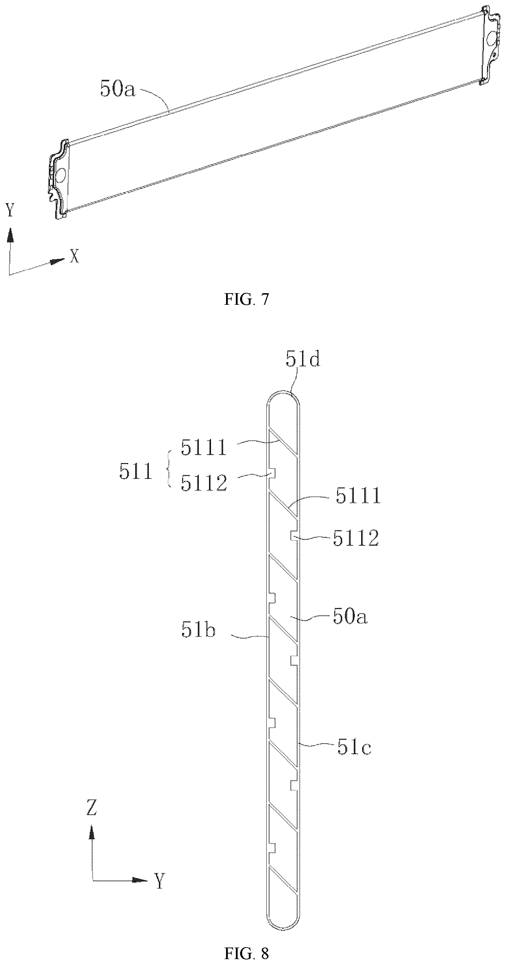

Referring to Fig. 6 to Fig. 8, in some embodiments, the partition 50 has a top wall 51b a bottom wall 51c that are arranged opposite to each other in the second direction Y, as well as a side wall 5 1d connected to the top wall 5 1b and the bottom wall 51c. The top wall 5 1b, the bottom wall 51c, and the side wall 51d enclose to form the medium flow channel 50a. The medium flow channel 50a is arranged to be in communication with the inlet pipe 62 and the outlet pipe 63. Under a predetermined pressure, the top wall 51b and the bottom wall 51c are capable of moving closer to each other at least partially in the second direction Y, for absorbing the expansive force of the battery cell 21.

The top wall 51b, the bottom wall 51c, and the side wall 51d enclose to form the medium flow channel 50a, and the medium flow channel 50a is arranged to be in communication with the inlet pipe 62 and the outlet pipe 63, so that the heat exchange medium is capable of entering the medium flow channel 50a through the inlet pipe 62 to perform heat exchange with the battery cell 21. The heat exchange medium after the heat exchange is then transferred to the outlet pipe 63 through the medium flow channel 50a and flows out, thereby completing the thermal management of the battery cell 21.

Under a predetermined pressure, the top wall 51b and the bottom wall 51c are capable of moving closer to each other at least partially in the second direction Y, which may be understood as that when the battery cell 21 expands during operation and an action force exerted to the partition 50 exceeds a predetermined pressure, the partition 50 is capable of deforming to absorb the expansive force of the battery cell 21, that is, the cross-sectional area of the partition 50 in the second direction X becomes smaller, so as to improve the safety performance of the battery 100. At the same time, the partition 50 is capable of always maintaining a more compact connection with the battery cell 21, thereby improving the connection strength.

In some embodiments, the partition 50 includes a supporting assembly 511. The supporting assembly 511 is arranged in the medium flow channel 510a. In the height direction Z of the box body 10, the supporting assembly 511 includes a plurality of first supporting members 5111 distributed at intervals. The first supporting members 5111 are connected to the top wall 51b and the bottom wall 51c, respectively. The first supporting member 5111 is inclined and forms an angle with one of the top wall 51b and the bottom wall 51c being less than 90°.

The first supporting members 5111 are distributed at intervals in the height direction Z. Optionally, the interval size between two adjacent first supporting members 5111 may be the same or different.

Optionally, the quantity of first supporting members 5111 included in the supporting assembly 511 may be set according to the size of the partition 50. The supporting assembly 511 is arranged in the medium flow channel 510a and is used for supporting the top wall 51b and the bottom wall 51c, for ensuring the supporting requirements for the top wall 51b and the bottom wall 51c.

The first supporting members 5111 are connected to the top wall 51b and the bottom wall 51c, respectively. It is understandable that when the partition 50 deforms to absorb the expansive force of the battery cell 21, the first supporting member 5111 may deform to adapt to the case that the top wall 51b and the bottom wall 51c are capable of moving at least partially toward each other in the second direction X.

By arranging the first supporting member 5111 to be inclined and setting the angle formed with one of the top wall 51b and the bottom wall 51c to be less than 90°, the bendability of the first supporting member 5111 is capable of being improved, which is capable of being better deformed to meet the requirements of the partition 50 absorbing the expansive force, and avoiding the risk of a small deformation space due to the straight shape and easy breakage and failure.

For example, the angle between the first supporting member 5111 and one of the top wall 51b and the bottom wall 51c is set in a range of 30° to 60°, which is conducive to better deformation while meeting the support requirements, and is less easy to break.

Optionally, inclination directions of two adjacent first supporting members 5111 may be the same, or of course, may be different.

Optionally, the material of the first supporting member 5111 may be made of a reinforcing rib structure to ensure the support function while achieving the lightweight design of the partition 50, thereby achieving the lightweight design of the battery 100 as a whole.

Optionally, the first supporting member 5111 is connected to the top wall 51b and the bottom wall 51c and extends in the first direction Y, so as to increase connection areas between the first supporting member 5111 and the top wall 51b and the bottom wall 51c, thereby improving the supporting strength.

In some embodiments, the first supporting member 5111 is in the form of a plate-shaped structure.

By arranging the first supporting member 5111 in a flat plate-shaped structure, it is capable of deforming better to meet the requirement of the partition 50 absorbing the expansive force of the battery cell 21.

Moreover, it is conducive to production and processing, and improves the production efficiency.

In some embodiments, in the height direction Z of the box body 10, the supporting assembly 511 further includes a plurality of second supporting members 5112 arranged at intervals. The extension size of the second supporting members 5112 in the second direction X is smaller than the distance between the top wall 51b and the bottom wall 51c, and the second supporting member 5112 is connected to at least one of the top wall 51b and the bottom wall 51c.

Optionally, the second supporting member 5112 may be arranged on the top wall 51b, or may be arranged on the bottom wall 51c. For example, the second supporting member 5112 may be arranged on both the top wall 51b and the bottom wall 51c.

For example, in the height direction Z, a second supporting member 5112 is arranged between every two adjacent first supporting members 5111. Optionally, one of the two adjacent second supporting members 5112 is arranged on the top wall 51b and the other is arranged on the bottom wall 51c, for ensuring that the top wall 51b and the bottom wall 51c are evenly stressed without bearing too much weight.

By arranging the second supporting member 5112 and setting its extension size in the second direction X to be smaller than the distance between the top wall 51b and the bottom wall 51c, it can cooperate with the first supporting member 5111 to achieve a better supporting effect, and also can control a deformation range of the partition 50. When the second supporting member 5112 on one of the top wall 51b and the bottom wall 51c contacts the other, the deformation of the partition 50 may be further limited to avoid clogging of the medium flow channel 510a, thereby ensuring the effectiveness of the medium flow channel 510a, and ensuring the effectiveness of the partition 50.

In some embodiments, the second supporting member 5112 is in the form of a polygonal column.

By arranging the second supporting member 5112 as a polygonal column, the second supporting member 5112 has a sufficient cross-sectional area, and when the partition 50 absorbs the expansive force of the battery cell 21 and deforms so that the second supporting member 5112 arranged on the top wall 51b or the bottom wall 51c contacts with the other wall, the second supporting member 5112 is capable of having a sufficient contact area to better improve the supporting capacity and avoid damage or even failure of the second supporting member 5112 from causing contact of the top wall 51b with the bottom wall 51c, thereby ensuring the effectiveness of the partition 50.

Optionally, the second supporting member 5112 is arranged perpendicularly to the top wall 51b and the bottom wall 51c, for better ensuring its supporting effect on the partition 50 and ensuring that the medium flow channel 510a may not be blocked.

In some embodiments, second supporting members 5112 are arranged on both the top wall 51b and the bottom wall 51c. In the height direction Z of the box body 10, the first supporting members 5111 and the second supporting members 5112 are alternately distributed.

The first supporting members 5111 and the second supporting members 5112 are alternately distributed. Optionally, two adjacent second supporting members 5112 may be alternately arranged on the top wall 51b and the bottom wall 51c. Of course, the positions of the second supporting members 5112 may also be arranged according to a certain arrangement rule.

For example, in the height direction Z, one of the two adjacent second supporting members 5112 is arranged on the top wall 51b and the other is arranged on the bottom wall 51c, for ensuring that the top wall 5 1b and the bottom wall 51c are evenly stressed without bearing too much weight.

Arranged in this manner, it is possible to ensure a uniform supporting function for the top wall 51b and the bottom wall 51c of the partition 50, and to prevent clogging in every part of the medium flow channel in the first direction Y, thereby being capable of well ensuring the effectiveness of the medium flow channel 510a.

Still referring to Fig. 2 to Fig. 6, in some embodiments, the box body 10 includes a top cover 30, a bottom cover 11, and an accommodating frame 12. The bottom cover 11 and the top cover 30 are relatively arranged at both ends of the accommodating frame 12 in the height direction Z of the box body 10. The position-limiting members 40 are respectively connected to the accommodating frame 12 and at least one of the top cover 30 and the bottom cover 11.

The top cover 30, the bottom cover 11 and the accommodating frame 12 together form the box body accommodating the battery cells 21 to ensure sealing requirements.

Optionally, the accommodating frame 12 may have an opening 10a. Optionally, the accommodating frame 12 may be provided with the opening 10a on one side, that is, the accommodating frame 12 is integrally formed with one of the top cover 30 and the bottom cover 11, and the other closes the opening 10a and is connected with the accommodating frame 12 and enclosed to form the box body 10, for sealing and protecting the battery group 20. Of course, the accommodating frame 12 may also be provided with openings 10a on both sides, and the two openings 10a are closed by using the top cover 30 and the bottom cover 11 respectively, and are connected to the accommodating frame 12 and enclosed to form the box body 10, for sealing and protecting the battery group 20.

In order to improve the sealing performance after the accommodating frame 12 is connected to the top cover 30 and the bottom cover 11, a sealing member, such as a sealant and a seal ring, may be arranged between the box body 10 and the top cover 30 or the bottom cover 11.

Optionally, the top cover 30, the bottom cover 11, and the box body 10 may be connected through bolts, Flowdrill Screws (FDS), bonding, welding, and the like, which is not limited in the present application.

Optionally, the top cover 30 or the bottom cover 11 may be made of a material with certain high hardness and strength (such as aluminum alloy), which is not prone to deformation and has higher structural strength to improve the safety performance.

Optionally, the bottom cover 11 and the accommodating frame 12 may have an integrally formed structure. Of course, the bottom cover 11 and the accommodating frame 12 may also be provided separately and then connected as a whole through welding, bonding, or other methods.

For example, the bottom cover 11 and the accommodating frame 12 are detachably connected, which is capable of reducing costs and facilitating the replacement of the bottom cover 11 or the accommodating frame 12 when problems such as damage occur.

Optionally, the bottom cover 11 and the accommodating frame 12 may be made of the same material, and of course, may also be made of different materials.

Optionally, the position-limiting member 40 is arranged at an interval from the bottom cover 11 or the top cover 30. Optionally, at least a part of the bottom cover 11 or top cover 30 is capable of being recessed away from the battery cell 21 in the height direction Z to form a recess portion. There is a gap between the recess portion and the position-limiting member 40. When collision, vibration, or another working condition occurs, the gap is capable of providing a buffering effect, which is conducive to better supporting and protecting the position-limiting member 40 and the battery cell 21 to improve the safety and reliability.

Optionally, the position-limiting member 40 is connected to the accommodating frame 12 and at least one of the top cover 30 and the bottom cover 11, respectively. During assembling and molding, the battery cells 21 and the position-limiting member 40 may be connected to the accommodating frame 12 first, and then covered by the top cover 30 or the bottom cover 11 to form the box body 10 in a sealed space.

In some embodiments, the box body 10 further includes a connecting seat 13, and the connecting seat 13 is arranged to protrude from the accommodating frame 12 in the first direction X.

By providing the connecting seat 13, it is convenient to connect and fix the battery 100 as a whole in a device to which it is applied, such as fixing it on a chassis of the vehicle 1000, thereby improving the connection stability and making the connection stronger. At the same time, a safety risk of the battery 100 caused by a connection failure is avoided, thereby ensuring the safe and reliable performance of the battery 100.

Optionally, the connecting seat 13 is arranged to protrude from one side of the accommodating frame 12 in the first direction X. Of course, the accommodating frame 12 is provided with protruding connecting seats 13 on both sides in the first direction X.

In some embodiments, the battery cell 21 further includes a busbar 71, and the busbar 71 is used for electrically connecting two adjacent battery cells 21.

Optionally, the quantity of the busbars 71 may be set to one, two, or, of course, a plurality of.

Two adjacent battery cells 21 are capable of being electrically connected through a busbar 71. Optionally, the busbar 71 may be connected to electrode terminals 201a on the adjacent battery cells 21, for realizing series connection, parallel connection, or parallel-series connection of a plurality of battery cells 21 in the same battery group 20 or two adjacent battery groups 20.

Optionally, the battery group 21 located at the outermost side in the first direction is provided with two electrode terminals 201a as output terminals, and the busbar 71 electrically connected to the two output terminals is also referred to as an output member.

In some embodiments, the battery 100 further includes an output member base 72, and the output member base 72 is arranged on the position-limiting member 40 and used for supporting the busbar 71 as the output member. Optionally, the output member base 72 includes an insulating material.

Optionally, the quantity of output members may be set to two. The two output members are electrically connected to the two output ends respectively and are arranged on the same side of the second direction Y to form a power supply channel together with other busbars 71. Arranged in this way, it is capable of avoiding the use of a large-sized output member across the battery group 20, which is beneficial to improving the compactness and the energy density of the battery cells 21.

Optionally, the shape of the output member may be a bent plate shape or other shapes, which is not limited in the present application.

In some embodiments, the two output terminals are respectively arranged on the two battery cells 21 located at end portions of the outermost battery group 20 in the first direction X.

Arranged in this way, it is beneficial to ensure that the two output members are arranged on the same side in the second direction Y, so that the two output members and the two output ends form an output interface for connection with an external electrical apparatus.

Optionally, the output member base 72 is arranged on the position-limiting member 40 and is used for supporting the busbar 71 as the output member, which facilitates the mounting and fixation of the busbar 71, and can also avoid contact short circuit, thereby ensuring the safety performance of the battery 100.

In some embodiments, the position-limiting member 40 is provided with an accommodating groove 40b, and the output member base 72 at least partially extends into the accommodating groove 40b.

Optionally, the quantity of the accommodating grooves 40b may be set to one, two, or, of course, a plurality of. Optionally, the shape of the accommodating groove 40b may be set to match the shape of the output member base 72, and the accommodating groove 40b is capable of just fitting into the output member base 72 to limit its position and prevent displacement.

The accommodating groove 40b is capable of playing a position-limiting role on the output member base 72 to prevent its displacement from causing safety problems for the battery 100. At the same time, it can also play a positioning role to facilitate the mounting of the output member base 72 and improve the production efficiency.

Optionally, the quantities of the accommodating grooves 40b and the output member bases 72 may be in one-to-one correspondence, or they may be in many-to-one arrangement, that is, a plurality of output member bases 72 may be arranged in the same accommodating groove 40b.

For example, the position-limiting member 40 is provided with two or more accommodating grooves 40b, and the two or more accommodating grooves 40b are arranged at intervals.

Optionally, the accommodating groove 40b may be formed by stamping, that is, the accommodating groove 40b can be quickly formed on the position-limiting member 40. The process is simple, and at the same time, materials can be saved, which is conducive to achieving the lightweight design.

Still referring to Fig. 2 to Fig. 4, in some embodiments, in the height direction Z of the box body 10, the battery cell 21 is formed with an electrode terminal 201a at one end close to the bottom cover 11, and a surface of the battery cell away from the electrode terminal 201a is connected to the top cover 30.

Arranged in this way, it is understandable that the battery cell 21 is placed upside down in the box body 10, so that when the battery cell 21 is assembled to an electrical apparatus (such as the vehicle 1000 ), it can be placed upside down, and therefore, the electrode terminal 201a of the battery cell 21 faces downward, and the surface of the battery cell 21 away from the electrode terminal 201a is connected to the top cover 30, which can improve the utilization rate of the box body 10 in the height direction and ensure the personal safety of the driver.

Moreover, by means of the above arrangement, in a process that the battery cells 21 clamped by a clamp and connected into a whole are put into the opening 10a of the box body 10, since the end cover assembly 201 of the battery cell 21 is located at one end arranged away from the opening 10a, it is capable of preventing the clamp from interfering with the end cover assembly 201 and preventing its failure or even damage, thereby ensuring the safety performance of the battery 100. In addition, placing the battery cells 21 upside down in the box body 10 helps improve the assembling efficiency and is simple in operation.

In some embodiments, the battery 100 further includes a buffer member, and the buffer member is arranged between the electrode terminal 201a and the bottom cover 11 in the height direction Z.

By providing the buffer member, when the battery 100 as a whole encounters bumps or vibrations, the electrode terminals 201a of the battery cells 21 may be buffered by the buffer member, so as to avoid scratches with the bottom cover 11 and damage to a pressure relief mechanism and other structures, thereby ensuring the safety performance of the battery 100.

In a second aspect, the embodiments of the present application provide an electrical apparatus, including the battery 100 in any one of the foregoing embodiments, the battery 100 is used for supplying electric energy so that the electrical apparatus is capable of operating normally.

It should be noted that the electrical apparatus provided by the embodiments of the present application has the beneficial effects of the battery 100 in any of the foregoing embodiments. For details, reference may be made to the aforementioned description of the beneficial effects of the battery 100, which will not be repeated in the embodiments of the present application.

It should be noted that in case of no conflicts, the embodiments and the features of the embodiments in the present application may be combined with each other.

Finally, it should be noted that the above embodiments are merely used for illustrating rather than limiting the technical solutions of the present application. Although the present application has been described in detail with reference to the above embodiments, those of ordinary skill in the art should understand that the technical solutions recorded in the above embodiments may still be modified, or some of the technical features therein may be equivalently substituted. However, such modifications or substitutions do not make the essence of the corresponding technical solutions depart from the spirit and scope of the technical solutions of the embodiments of the present application.

## Claims

1. A battery, comprising:
a box body;
a battery group arranged in the box body, wherein the battery group comprises two or more battery cells arranged in a first direction, the battery cell comprises a first side wall and a second side wall connected together, the first side wall is a wall having the largest area among all outer walls of the battery cell, and the second side walls of two adjacent battery cells are arranged opposite to each other in the first direction; and
a position-limiting member fixedly connected to the box body and abutting against the first side wall of the battery cell, wherein the position-limiting member is used for limiting deformation of the battery cell in a second direction, and the second direction is perpendicular to the first side wall.

2. The battery according to claim 1, wherein in a height direction of the box body, a height dimension of the position-limiting member is H, a height dimension of the battery cell is h, and 2/3≤H/h≤11/10.

3. The battery according to claim 1 or 2, wherein in a height direction of the box body, a height dimension of the position-limiting member is H, a height dimension of the battery cell is h, and 0.9≤H/h≤1.

4. The battery according to claim 3, wherein the position-limiting member comprises a position-limiting beam, the position-limiting beam extends in the first direction, both ends of the position-limiting beam in the first direction are connected to the box body, and the position-limiting beam abuts against the first side wall of the battery cell and is connected to the first side wall.

5. The battery according to claim 4, wherein the position-limiting beam is provided with a plurality of cavities penetrating in the first direction therein.

6. The battery according to claim 4, wherein the quantity of the position-limiting beams is two, the two position-limiting beams are arranged at an interval in the second direction, and the battery group is clamped between the two position-limiting beams.

7. The battery according to any one of claims 1 to 6, wherein the quantity of the battery groups is two or more, the two or more battery groups are arranged in the second direction, a partition is arranged between two adjacent battery groups, and the partition is connected to the first side walls of the battery cells in the two adjacent battery groups.

8. The battery according to claim 7, wherein the partition is adhered and fixed to the first side walls of the battery cells in the two adjacent battery groups.

9. The battery according to claim 7, wherein the partition is used for adjusting the temperature of the battery cell, and a medium flow channel is arranged in the partition.

10. The battery according to claim 9, wherein the battery further comprises a communication channel, an inlet pipe, and an outlet pipe, and in the second direction, the medium flow channels of two adj acent partitions are in communication through the communication channel, and the inlet pipe and the outlet pipe are in communication with the medium flow channel of the same partition.

11. The battery according to claim 10, wherein the box body is provided with a through hole, and the inlet pipe and the outlet pipe each extend out of the box body through the through hole.

12. The battery according to any one of claims 1 to 11, wherein the box body comprises a top cover, a bottom cover, and an accommodating frame, the bottom cover and the top cover are relatively arranged at both ends of the accommodating frame in the height direction of the box body, and the position-limiting member is connected to the accommodating frame and at least one of the top cover and the bottom cover.

13. The battery according to claim 12, wherein the box body further comprises a connecting seat, the connecting seat is arranged to protrude from the accommodating frame in the first direction, and the connecting seat is used for mounting the battery on the electrical apparatus.

14. The battery according to any one of claims 1 to 13, wherein the battery further comprises a busbar and an output member base, the busbar is electrically connected to the battery cell, and the output member base is arranged on the position-limiting member and used for supporting the busbar.

15. The battery according to claim 14, wherein the position-limiting member is provided with an accommodating groove, and the output member base at least partially extends into the accommodating groove.

16. The battery according to claim 12, wherein in the height direction of the box body, the battery cell is formed with an electrode terminal at one end close to the bottom cover, and a surface of the battery cell away from the electrode terminal is connected to the top cover.

17. The battery according to claim 16, wherein the battery further comprises a buffer member, and the buffer member is arranged between the electrode terminal and the bottom cover in the height direction.

18. An electrical apparatus, comprising the battery according to any one of claims 1 to 17, the battery used for supplying electric energy.
